# EUROPÄISCHE PATENTSCHRIFT

(11) **EP 0 710 967 B1**
(45) Veröffentlichungstag und Bekanntmachung des Hinweises auf die Patenterteilung: **04.02.1998**
(21) Anmeldenummer: 95117276.6
(22) Anmeldetag: 02.11.1995
(51) Int. Cl.: H01G 2/04

(54) **Anschlusselement für elektrische Kondensatoren**
Terminal for electrical capacitors
Elément de connexion pour condensateurs électriques

(30) Priorität: 03.11.1994 DE 4439278
(43) Veröffentlichungstag der Anmeldung: 08.05.1996
(73) Patentinhaber: SIEMENS MATSUSHITA COMPONENTS GmbH & CO KG, 81617 München (DE)
(72) Erfinder: Schweikert, Wilhelm, Dipl.-Ing., D-89522 Heidenheim (DE); Hebel, Rainer, Dipl.-Ing., D-89518 Heidenheim (DE)
(74) Vertreter: Fuchs, Franz-Josef, Dr.-Ing.

(56) Entgegenhaltungen:
- EP-A- 0 295 310
- EP-A- 0 450 122

## Beschreibung

Die Erfindung betrifft ein Anschlußelement zum Ausgleichen von Längentoleranzen für elektrische Kondensatoren, insbesondere Elektrolytkondensatoren, die in Kondensatorbatterien an Stromschienen befestigt sind.

Es gibt Anwendungsfälle, für die ein einzelner elektrischer Kondensator bzw. Elektrolytkondensator nicht ausreicht, so daß hierfür Kondensator-Batterien in Parallel- und/oder Reihenschaltung aufgebaut werden. Hierbei werden die Anschlüsse der elektrischen Kondensatoren mit Stromschienen verbunden. Da Kondensatoren in Bezug auf ihre Gesamtlänge Toleranzen aufweisen können, kann dies beim Zusammenbauen zu einer Batterie zu Problemen führen, wenn die "starre" Stromschiene die Anschlüsse der einzelnen Kondensatoren verbindet. Dies kann zum Beispiel ein schlechter elektrischer Kontakt wegen eines Spalts zwischen Stromschiene und Anschluß sein oder auf einer mechanischen Überlastung der Anschlüsse beruhen.

Es wäre zwar prinzipiell möglich, diese Probleme zu umgehen, beispielsweise durch flexible Anschlußschienen, Anschlußschienenstücke, die die Kondensatoren miteinander verbinden oder durch eine engtolerierte Kondensatorlänge, jedoch führt dies zu Problemen bei der Montage oder zu höheren Bauelementkosten.

Aufgabe der vorliegenden Erfindung ist es, ein Anschlußelement anzugeben, das als Längenausgleichselement Längentoleranzen beim Einsatz von elektrischen Kondensatoren in Kondensatorbatterien ausgleicht.

Diese Aufgabe wird erfindungsgemäß dadurch gelöst, daß das Anschlußelement als Spreizdübel mit Innengewinde ausgebildet ist, und daß das Anschlußelement in einem im Kondensatoranschluß angeordneten Sackloch anbringbar ist.

Vorteilhafte Ausgestaltungen des Gegenstandes der Erfindung sind in den Unteransprüchen angeführt.

Die Erfindung wird im folgenden anhand von Ausführungsbeispielen erläutert.

In der dazugehörenden Zeichnung zeigen:
Fig.1 ein Anschlußelement mit kegelförmigen Schaft als Schnittbild und in Draufsicht,
Fig.2 ein Anschlußelement mit kegelförmigen Innengewinde und
Fig.3 einen an einer Stromschiene befestigten Kondensator.

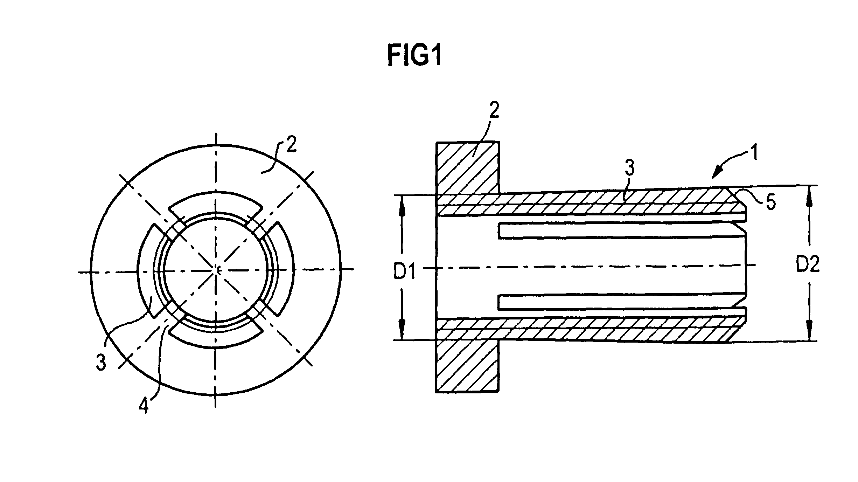

In der Fig.1 ist ein Anschlußelement 1 dargestellt. Das Anschlußelement 1 ist als Spreizdübel ausgebildet und besitzt einen Bund 2 und einen Schaft 3, der mit vier Schlitzen 4 versehen ist. Auf der Innenseite des Schaftes 3 ist ein durchgehendes zylindrisches Innnengewinde angeordnet.

Der Schaft 3 ist kegelförmig ausgebildet und weist an der dem Bund 2 zugewandten Seite einen Durchmesser D1 auf, der sich stetig zum Ende des Schaftes 3 bis auf einen Durchmesser D2 vergrößert, so daß D2>D1 ist. Das Anschlußelement 1 wird in ein Sackloch gesteckt, das in dem am Kondensator angeordneten Anschluß angebracht ist. Der Durchmesser D1 am Schaft 3 des Anschlußelements 1 wird so gewählt, daß unter Berücksichtigung des Sacklochdurchmessers ein Spiel vorhanden ist.

Beim Einführen des Anschlußelements 1 in das Sackloch wird der Schaft 3 wegen seines kegelförmigen Qurerschnitts mit D2>D1 zusammengedrückt, so daß sich das ursprünglich zylinderförmige Innengewinde in Richtung des Schaftendes stetig verjüngt. Hierfür ist es erforderlich, daß D2 größer als der größte Sacklochdurchmesser ist.

Zum besseren Einführen in das Sackloch ist das Ende des Schaftes 3 mit abgeschrägten Flächen 5 versehen.

Beim Eindrehen der Befestigungsschraube wird der Schaft 3 des metallischen Anschlußelements 1 gepreizt und preßt sich in das weiche Aluminium des Kondensatoranschlusses ein.

Das Anschlußelement 1 kann beim Eindrücken in die richtige Position gebracht werden oder mit der teilweise eingedrehten Befestigungsschraube an die Stromschiene herangezogen werden.

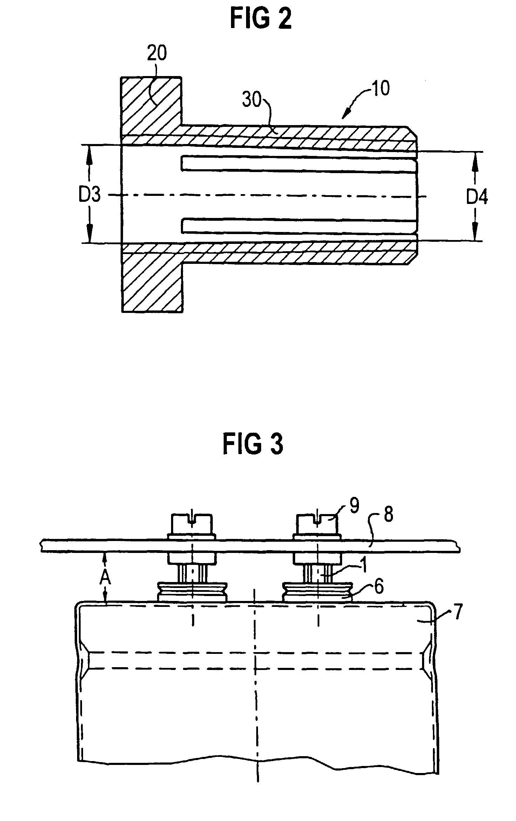

In Fig.2 ist im Schnittbild ein weiteres Anschlußelement 10 dargestellt, dessen Schaft 30 zylindrisch ausgeführt ist. Der Innendurchmesser des Anschlußelements 1 ist dabei derart gewählt, daß er an der Seite des Bundes 20, D3, am größten ist und sich in Richtung des Schaftendes setig auf D4 verjüngt. Dadurch wird das Innengewinde kegelig verjüngt mit D4<D3.

Das Innengewinde kann vollständig oder nicht ganz bis zum Schaftende durchgeschnitten sein.

Beim Eindrehen der Besfestigungsschraube ergibt sich wieder die gleiche Wirkung wie beim Ausführungsbeispiel nach Fig.1, indem der Schaft des Anschlußelements 1 in die Wandung des Sacklochs eingepreßt wird.

In der Fig.3 ist ein elektrischer Kondensator 7 gezeigt, dessen Anschlüsse 6 mit Hilfe des Anschlußelements 1 und der Befestigungsschrauben 9 an einer Stromschiene 8 einer Kondensatorbatterie befestigt ist. Der Fig.4 ist zu entnehmen, daß der Abstand A zwischen Kondensator 7 und Stromschiene 8 in einfacher Weise durch das Anschlußelement variiert werden kann, so daß vorhandene Längentoleranzen des Kondensators 7 leicht ausgeglichen werden können.

## Patentansprüche

1. Anschlußelement (1,10) zum Ausgleichen von Längentoleranzen für elektrische Kondensatoren (7), insbesondere Elektrolytkondensatoren, die in Kondensatorbatterien an Stromschienen (8) befestigt sind,
**dadurch gekennzeichnet,**
daß das Anschlußelement (1,10) als Spreizdübel mit Innengewinde ausgebildet ist, und daß das Anschlußelement (1,10) in einem im Kondensatoranschluß (6) angeordneten Sackloch anbringbar ist.

2. Anschlußelement nach Anspruch 1,
**dadurch gekennzeichnet,**
daß das Anschlußelement (1,10) einen Bund (2,20) und einen Schaft (3,30) aufweist, und daß der Schaft (3,30) vier Schlitze (4) besitzt.

3. Anschlußelement nach Anspruch 1 oder 2,
**dadurch gekennzeichnet,**
daß das Innengewinde zylindrisch ausgebildet ist, und daß der Schaft (3) einen kegelförmigen Querschnitt besitzt mit einem Durchmesser, der am Bund (2) kleiner (D1) als am Ende (D2) des Schaftes (3) ist.

4. Anschlußelement nach Anspruch 3,
**dadurch gekennzeichnet,**
daß das Ende des Schaftes (3) abschrägte Flächen (5) aufweist.

5. Anschlußelement nach Anspruch 1 oder 2,
**dadurch gekennzeichnet,**
daß das Innengewinde kegelig verjüngt ist, und daß der Schaft (30) eine zylinderförmige Form besitzt.

6. Anschlußelement nach Anspruch 1 oder 2,
**dadurch gekennzeichnet,**
daß das Innengewinde nicht ganz bis zum Schaftende durchgeschnitten ist, und daß der Schaft (30) eine zylinderförmige Form besitzt.

## Claims

1. Connection element (1, 10) for the compensation of length tolerances for electrical capacitors (7), especially electrolytic capacitors, which are fastened in capacitor batteries on conductor rails (8), characterized in that the connection element (1, 10) is designed as an expanding dowel with an internal thread, and in that the connection element (1, 10) can be mounted in a blind hole arranged in the capacitor connection (6).

2. Connection element according to Claim 1, characterized in that the connection element (1, 10) has a collar (2, 20) and a shank (3, 30), and in that the shank (3, 30) possesses four slots (4).

3. Connection element according to Claim 1 or 2, characterized in that the internal thread is designed cylindrically, and in that the shank (3) possesses a conical cross-section with a diameter which is smaller (D1) at the collar (2) than at the end (D2) of the shank (3).

4. Connection element according to Claim 3, characterized in that the end of the shank (3) has bevelled faces (5).

5. Connection element according to Claim 1 or 2, characterized in that the internal thread is tapered conically, and in that the shank (30) possesses a cylindrical shape.

6. Connection element according to Claim 1 or 2, characterized in that the internal thread is not cut through completely as far as the shank end, and in that the shank (30) possesses a cylindrical shape.

## Revendications

1. Elément de connexion (1, 10) permettant de compenser des tolérances de longueur pour des condensateurs électriques (7), notamment des condensateurs électrolytiques, qui sont fixés à des barres de contact (8) dans des batteries de condensateurs,
caractérisé en ce que l'élément de connexion (1, 10) est exécuté en tant que cheville à expansion avec un filet intérieur et en ce que l'élément de connexion (1, 10) peut être fixé dans un trou borgne situé dans une borne de connexion (6) d'un condensateur.

2. Elément de connexion selon la revendication 1, caractérisé en ce que l'élément de connexion (1, 10) est pourvu d'un collet (2, 20) et d'une tige (3, 30) et en ce que la tige (3, 30) est pourvue de quatre fentes (4).

3. Elément de connexion selon la revendication 1 ou 2, caractérisé en ce que le filet intérieur est exécuté de manière cylindrique et en ce que la tige (3) a une section transversale conique avec un diamètre qui est plus petit (D1) au niveau du collet (2) qu'au niveau de l'extrémité (D2) de la tige (3).

4. Elément de connexion selon la revendication 3, caractérisé en ce que l'extrémité de la tige (3) est pourvue de faces biseautées (5).

5. Elément de connexion selon la revendication 1 ou 2, caractérisé en ce que le filet intérieur diminue de manière conique et en ce que la tige (30) a une forme cylindrique.

6. Elément de connexion selon la revendication 1 ou 2, caractérisé en ce que le filet intérieur n'est pas découpé complètement jusqu'à l'extrémité de la tige et en ce que la tige (30) a une forme cylindrique.
